# FASCICULE DE BREVET EUROPEEN

(11) **EP 0 575 207 B1**
(45) Date de publication et mention de la délivrance du brevet: **26.08.1998**
(21) Numéro de dépôt: 93401299.8
(22) Date de dépôt: 19.05.1993
(51) Int. Cl.: E06B 3/66, G02F 1/153, B32B 17/10

(54) **Vitrage électrochrome architectural**
Architektonische elektrochrome Verglasung
Architectural electrochromic glazing

(30) Priorité: 21.05.1992 FR 9206172
(43) Date de publication de la demande: 22.12.1993
(60) Demande divisionnaire: 97114549.5
(73) Titulaire: SAINT-GOBAIN VITRAGE, 92400 Courbevoie (FR)
(72) Inventeur: Buffat, Bernard, F-75003 Paris (FR); Defendini, Francis, F-92500 Rueil Malmaison (FR); Padoy, Christian, F-95500 Gonesse (FR); Beaufays, Jean-Pierre, B-5190 Jemeppe s/Sambre (BE); Labbe, Jean-Pierre, B-5130 Aische en Refail (BE)
(74) Mandataire: Menes, Catherine

(56) Documents cités:
- EP-A- 0 086 873
- EP-A- 0 408 427
- EP-A- 0 419 321
- EP-A- 0 419 848
- EP-A- 0 437 914
- WO-A-90/00265
- US-A- 3 406 085
- US-A- 4 848 875
- SOLAR ENERGY MATERIALS vol. 22, no. 1, Mars 1991, AMSTERDAM NL pages 1 - 14 REILLY ET AL 'Thermal and optical analysis of switchable window glazings'
- CENTRAL PATENTS INDEX, BASIC ABSTRACTS JOURNAL Week 8247, Derwent Publications Ltd., London, GB; AN 82-00807J & JP-A-57 167 009 (ASAHI GLASS) 14 Octobre 1982

## Description

L'invention concerne un vitrage électrochrome architectural ; plus précisément, l'invention a pour objet un vitrage bâtiment dont les facteurs de transmission, de réflexion et d'absorption énergétiques peuvent être modifiés par une commande électrique.

Depuis quelques années, le développement des systèmes de climatisation a créé une demande accrue de vitrages présentant un facteur solaire faible, autrement dit de vitrages contribuant aussi faiblement que possible à l'élévation de la température à l'intérieur du bâtiment. Dans ce but, des architectes se sont tournés vers des vitrages comportant une glace réfléchissante de protection solaire obtenue par dépôt d'une couche minérale sur une glace claire ou teintée dans la masse, le dépôt étant par exemple réalisé par une technique de pyrolyse ou une technique de pulvérisation cathodique sous vide d'une couche d'oxydes métalliques.

Malheureusement, l'effet immédiat de ces couches de protection solaire est une diminution de la transmission lumineuse, avec dans le cas des produits les plus performants du point de vue facteur solaire, la nécessité quasi permanente d'un éclairage artificiel dans le bâtiment. On comprend bien que cette chute de la transmission lumineuse est dans une large mesure inévitable si on la rapproche de la définition physique du facteur solaire d'un vitrage, à savoir que le facteur solaire est le rapport entre l'énergie totale entrant dans le local à travers le vitrage et l'énergie solaire incidente, l'énergie totale étant la somme de l'énergie solaire entrant par transmission directe et de l'énergie cédée par le vitrage à l'ambiance intérieure à la suite de son échauffement par absorption énergétique. En pratique d'ailleurs, le choix du client s'effectue avant tout sur le niveau de transmission lumineuse, le facteur solaire étant une retombée de ce choix.

D'autre part, les conditions d'ensoleillement varient d'un bout à l'autre de l'année et selon l'heure de la journée. A l'approche de la tombée de la nuit ou en hiver sous les climats froids ou tempérés, la préoccupation première est une transmission lumineuse élevée. Par contre, dans les périodes de fort ensoleillement, une luminosité suffisante pourra être obtenue même avec une transmission lumineuse très faible ; l'essentiel alors est bien la réduction du facteur solaire pour diminuer le coût de la climatisation. Enfin, et indépendamment de toutes les conditions d'ensoleillement, il peut être utile d'opacifier un vitrage, par exemple lors d'une projection vidéo.

C'est notamment avec l'objectif d'apporter une solution évolutive qu'ont été développés les vitrages électrochromes, c'est-à-dire très généralement des vitrages à propriétés optiques électrocommandées. A ce jour, différents systèmes électrochromes ont été proposés pour des applications telles que dispositifs d'affichage, des rétroviseurs avec une position anti-éblouissement ou encore des toits automobiles, mais aucun vitrage bâtiment n'a été développé de façon complète, cette application apparaissant toujours dans la littérature comme un objectif encore lointain, sans concrétisation à court terme.

Selon un article paru dans "Solar Energy Materials", volume 22 - n° 1 - mars 1991 - Susan Reilly - Dariush Arasteh et Stephen Selkowitz, ont évolué à partir de modèles calculés, quelles devraient être les configurations optimales en vue d'une diminution des charges de climatisation (refroidissement) et d'éclairage. Bien que cet article se refère à des systèmes électrochromes purement théoriques, il conclut que dans le cas d'un vitrage monolithique, il est préférable de placer le système électrochrome sur la face tournée vers l'extérieur alors que dans le cas d'un double vitrage, le système doit être de préférence placé sur le panneau tourné vers l'extérieur, face à la lame d'air intercalaire. D'autre part, ces auteurs mentionnent l'intérêt d'incorporer en outre une ou plusieurs couches sélectives « statiques », telles que des couches à basse émissivité ou des feuilles de verre teintées.

Mais cet article ne tient pas compte des contraintes pratiques de réalisation d'un vitrage bâtiment et du fait qu'un système électrochrome doit si possible être placé dans des conditions spécifiques propres à éviter sa dégradation.

Le premier objet de la présente invention est un vitrage à contrôle solaire électrocommandable particulièrement adapté à une configuration bâtiment.

Le document EP-A-0 408 427 divulgue un vitrage à contrôle solaire électrocommandable variable, qui comporte, en partant de l'extérieur du vitrage, un panneau extérieur présentant une structure composite définie par une première feuille de verre extérieure, un polymère organique d'assemblage filtrant les ultraviolets, une seconde feuille de verre, un système à transmission variable électrochrome composé d'un empilement de couches fonctionnelles, notamment un empilement comprenant une couche électroconductrice transparente, une couche d'un matériau électrochrome cathodique, un polymère organique conducteur ionique, une couche d'un matériau électrochrome anodique et une couche électroconductrice transparente, et enfin une troisième feuille de verre. L'invention a pour objet un vitrage bâtiment à contrôle solaire électrocommandable formé de deux panneaux espacés par une lame d'un gaz intercalaire, un panneau « extérieur » et un panneau « intérieur », le panneau tourné vers l'extérieur du bâtiment étant le panneau à structure composite précédemment défini, et comportant le système à transmission variable du type électrochrome comprenant deux substrats transparents, constitués notamment par des feuilles de verre, assemblés par un polymère organique conducteur ionique, revêtus sur les faces d'assemblage de couches électroconductrices transparentes et de couches de matériaux électrochromes anodique et cathodique.

Le vitrage bâtiment selon l'invention est un vitrage feuilleté, ce qui permet d'assurer une plus grande sécurité. Le polymère organique d'assemblage, collé entre la première et la seconde feuille de verre est par exemple du type polyuréthane ou polyvinylbutyral (PVB), choisi de préférence parmi ceux présentant les meilleurs pouvoirs de filtration des ultra-violets, c'est-à-dire plus particulièrement ceux contenant des dopants "anti-U.V." tels que des dérivés du type benzo-phenols, benzo-triazoles ou autres dérivés tri-azoliques. Cette structure composite assure ainsi une très bonne protection pour le polymère organique conducteur ionique et les autres couches du système, en particulier la couche de matériau électrochrome et la contre-électrode qui peuvent présenter un vieillissement accéléré en cas de fortes expositions aux ultra-violets. Eventuellement, le polymère de type polyuréthane ou PVB ou la première feuille de verre sont colorés ce qui permet de modifier l'aspect du vitrage.

Par ailleurs, le facteur solaire du vitrage-bâtiment selon l'invention est très sensiblement amélioré si la face tournée vers la lame de gaz intercalaire d'au moins un des panneaux est revêtue d'une couche dite basse émissive, par exemple du type dépôt pyrolytique d'un oxyde d'étain et/ou d'indium ou de manière encore plus performante dépôt métallique, notamment d'argent, en sandwich entre deux couches protectrices d'oxydes métalliques.

Comme déjà mentionné, il importe que le système électrochrome soit placé dans des conditions spécifiques propres à éviter sa dégradation, ceci notamment en recourant à des joints qui permettent tout à la fois d'assurer une étanchéité rigoureuse tout en autorisant une continuité électrique entre le système électrochrome et l'extérieur où est situé notamment le boitier d'alimentation électrique permettant de sélectionner la tension appliquée entre les couches électroconductrices transparentes et/ou le temps de commutation, en fonction de l'état de coloration final souhaité et de l'état de coloration avant une commutation. D'autre part, les impératifs d'une production industrielle font que les étapes d'assemblage du double vitrage et de préparation du système électrochrome doivent pouvoir être espacés dans le temps et dans l'espace. Le système électrochrome doit donc être relativement autonome. Dans le même esprit, la configuration de montage choisie doit de préférence être relativement simple et réalisable par les techniques ordinaires de production des vitrages bâtiment. Conformément à un second mode de réalisation de l'invention, ceci est réalisé par un vitrage bâtiment à contrôle solaire électrocommandable formé de deux panneaux espacés par une lame d'un gaz intercalaire, le panneau tourné vers l'extérieur du bâtiment comportant un système à transmission variable du type électrochrome. Ledit panneau extérieur est constitué par une structure composite comportant, entre deux feuilles de verre, un empilement de couches fonctionnelles avec notamment une couche électroconductrice transparent, une couche d'un matériau électrochrome cathodique, un polymère organique conducteur ionique, une couche d'un matériau électrochrome anodique et une couche électroconductrice transparente, cet empilement de couches fonctionnelles étant isolé de l'extérieur par au moins trois joints d'étanchéité.

De préférence, on substitue à la feuille de verre tournée vers l'extérieur un vitrage du type feuilleté comportant au moins deux feuilles de verre assemblées par un polymère organique filtrant les ultra-violets. Il est alors particulièrement avantageux d'utiliser une configuration de montage incluant dans l'ensemble composite tourné vers l'extérieur une feuille de verre de dimensions réduites par rapport à celles des deux feuilles qui l'entoure de façon à délimiter une gorge périphérique servant de logement à au moins un joint périphérique d'étanchéité.

D'autres détails et caractéristiques avantageuses de l'invention ressortent de la description faite ci-après en référence aux dessins annexés qui représentent :
* **figure 1 :** un schéma d'un vitrage conforme au mode de réalisation préféré de l'invention,
* **figure 2** : une courbe comparative de la valeur de la transmission lumineuse en fonction du facteur solaire, obtenue par modélisation, dans un vitrage du type illustré à la figure 1 et de différents vitrages commerciaux de protection solaire.
* **figure 3** : une vue simplifiée de la configuration de montage du vitrage schématisé à la figure 1,
* **figure 4 *** un autre exemple de configuration de montage selon l'invention,
* **figure 5** : un troisième exemple de configuration de montage avec une représentation des éléments de connexion électrique.

Pour définir un vitrage bâtiment avec un facteur solaire électrocommandable, comportant à cet effet un système électrochrome, la première question qui se pose est celle de la configuration optimale. Pour déterminer celle-ci les auteurs ont réalisé différentes configurations type en calculant par modélisation les performances optiques. Ces différentes configurations ont été obtenues avec un système électrochrome constitué de deux substrats en verre séparés par un empilement comportant les couches fonctionnelles suivantes : couche électroconductrice/matériau électrochrome cathodique/ électrolyte conducteur ionique/matériau électrochrome anodique/couche électroconductrice.

les substrats en verre utilisés pour le système électrochrome sont des feuilles de verre float de 3 mm d'épaisseur, type planilux glace claire (marque déposée par la société SAINT-GOBAIN VITRAGE INTERNATIONAL), les facteurs lumineux en transmission et en réflexion étant respectivement de 91 % et 8 %, le facteur solaire de 89 % et les facteurs énergétiques en transmission, réflexion et absorption respectivement de 87 %, 8 % et 5 %.

A titre indicatif, les caractéristiques de chacun des matériaux utilisés dans les différentes couches fonctionnnelles de l'empilement sont les suivantes :
* couches électroconductrices : oxyde d'indium dopé à l'étain, déposé par pulvérisation cathodique magnétron d'épaisseur 400 nanomètres et de résistance carrée inférieure ou égale à 5 ohms,
* matériau électrochrome cathodique : oxyde de tungstène WO₃ déposé par pulvérisation cathodique magnétron réactive à partir d'une cible en tungstène en présence d'oxygène sous une pression de 50 millitors d'un mélange argon-oxygène (15%), pour une épaisseur de 300 nanomètres,
* matériau électrochrome anodique : oxyde d'iridium, déposé par pulvérisation cathodique assistée d'un champ magnétique, sous une pression de 6 millitorrs d'un mélange gazeux oxygène/hydrogène dans un rapport volumique 80/20, d'épaisseur 55 nanomètres, avec éventuellement une pré-insertion des protons par trempage dans un bain acide,
* électrolyte : solution solide d'acide phosphorique anhydre dans du polyoxyéthylène, d'épaisseur 100 micromètres, de conductivité à 20°C de 9.10⁻⁵ ohm⁻¹.cm⁻¹ et de transmission lumineuse supérieure à 85 %. Il est préparé de la manière suivante : dans des conditions anhydres, on dissout par litre de solvant de l'acide phosphorique anhydre (21,5 g) et du polyoxyéthylène de masse moléculaire 5 000 000 (densité 1,21 ; température de transition vitreuse -40°C ; rapport O/H du nombre d'atomes d'hydrogène de l'acide égal à 0,66). Le solvant est un mélange 60/40 en volume d'acétonitrile et de tétrahydrofurane.

La solution est coulée sous atmosphère à taux d'humidité contrôlé (inférieur ou égal à 50 ppm d'eau) par la méthode du tire-film sur le substrat recouvert de l'une ou l'autre des couches de matériau électrochrome. On évapore ensuite le solvant à température ambiante sous air sec pendant 20 h.

L'assemblage du système électrochrome est réalisé selon l'enseignement de la demande de brevet européen EP-A-477 065 c'est-à-dire, que la superposition des deux substrats - ou plus exactement des ensembles verre/couche électroconductrice transparente/matériau électrochrome et verre/couche électroconductrice transparente/matériau électrochrome/électrolyte - est précédée d'une étape de mise sous vide alors que ces deux ensembles sont mis en position d'assemblage et maintenus à distance l'un de l'autre. Cet espacement est avantageusement obtenu au moyen d'un cordon thermoplastique disposé à la périphérie des substrats, constitué de caoutchouc butyl et/ou de polyisobutylène, cordon qui va fluer à température élevée lors de l'assemblage par chauffage et qui va ainsi contribuer à garantir l'étanchéité à l'eau et à la vapeur d'eau du système électrochrome.

Le système électrochrome ainsi réalisé a été monté dans différents vitrages dont les configurations sont indiquées dans le tableau suivant, les exemples 1, 2 et 6 correspondant à des configurations double-vitrage, l'exemple 3 à une configuration feuilleté et les exemples 3 et 4 à des configurations mixtes feuilleté/double-vitrage. Par convention, les panneaux sont numérotés de l'extérieur vers l'intérieur. Sauf indication contraire, les panneaux de verre utilisés sont du type planilux teinte claire. Le terme PVB est l'abréviation conventionnelle pour un film de butyral de polyvinyle. Dans la configuration 6, le panneau de verre intérieur est revêtu sur sa face en contact avec la lame d'air intercalaire d'un revêtement métallique du type planitherm (marque déposée par la société SAINT-GOBAIN VITRAGE INTERNATIONAL), à base d'une couche d'argent métallique de 10 nm insérée dans un empilage verre/SnO₂ (40nm)/argent/NiCr (3 nm)/SnO₂ (40 nm).

| N° | Configuration | Etat | T_{L} (%) | T_{E} (%) | Facteur solaire | _{d} (nm) | Pₑ (%) |
|---|---|---|---|---|---|---|---|
| 1 | verre 1 = 6 mm | ON | 7 | 4 | 0,51 | 481 | 25 |
| | air = 12 mm | | | | | | |
| | verre 2=électrochrome | OFF | 29 | 20 | 0,56 | 562 | 5 |
| 2 | verre 1=électrochrome | ON | 7 | 4 | 0,15 | 481 | 25 |
| | air = 12 mm | | | | | | |
| | verre 2 = 6 mm | OFF | 29 | 20 | 0,29 | 562 | 5 |
| 3 | verre 1 = 3 mm | ON | 7 | 4 | 0,27 | 481 | 25 |
| | PVB = 0,38 mm | | | | | | |
| | verre 2=électrochrome | OFF | 32 | 22 | 0,40 | 564 | 5 |
| 4 | verre 1 = 6 mm | ON | 7 | 4 | 0,51 | 481 | 25 |
| | air = 12 mm | | | | | | |
| | verre 2 = 3 mm | | | | | | |
| | PVB = 0,38 mm | OFF | 29 | 19 | 0,57 | 560 | 5 |
| | verre 3=électrochrome | | | | | | |
| 5 | verre 1 = 3 mm | ON | 7 | 4 | 0,15 | 481 | 25 |
| | PVB = 0,38 mm | | | | | | |
| | verre 2=électrochrome | | | | | | |
| | air = 12 mm | OFF | 29 | 19 | 0,29 | 560 | 5 |
| | verre 3 = 6 mm | | | | | | |
| 6 | verre 1=électrochrome | ON | 6 | 3 | 0,11 | 482 | 24 |
| | air = 12 mm | | | | | | |
| | verre 2 = 6 mm + bas émissif | OFF | 26 | 15 | 0,24 | 561 | 6 |
| 7 | verre 1 = 3 mm | ON | 7 | 4 | 0,15 | 481 | 25 |
| | PVB = 0,38 mm | | | | | | |
| | verre 2=électrochrome | | | | | | |
| | air = 12 mm | OFF | 51 | 35 | 0,44 | 570 | 10 |
| | verre 3 = 6 mm | | | | | | |

Dans le tableau ci-dessus, T_{L}, T_{E}, F.S., _{d} et Pₑ correspondant respectivement aux facteurs de transmission lumineuse, de transmission énergétique, au facteur solaire, à la longueur d'onde de la teinte dominante (en nanomètres) et à la pureté dans la couleur, ces valeurs ayant été obtenues avec un système électrochrome dont la transmission lumineuse à l'état coloré est de 7 % et à l'état décoloré de 32 % (pour les configurations 1 à 6) ou 57 % (configuration 7).

Du tableau ci-dessus, il ressort que les configurations 2, 5 et 6, toutes trois de type double-vitrage avec le système électrochrome en panneau extérieur répondent le mieux au problème posé d'une modulation du contrôle solaire, avec dans ces trois cas une variation du simple au double du facteur solaire. La configuration 3 de type feuilleté monté en vitrage monolithique conduit certes à une différence importante entre les facteurs solaires à l'état décoloré et à l'état coloré mais ceux-ci restent d'un niveau relativement élevé alors que les performances des vitrages montés en configuration double-vitrage sont globalement bien supérieures.

Les configurations 2 et 5 sont équivalentes du point de vue transmission lumineuse et facteur solaire et peuvent donc être utilisées indifféremment si on s'en tient aux critères optiques. Néanmoins, la configuration 5 présente l'avantage d'une non exposition directe au rayonnement solaire du système électrochrome qui est protégé et par le panneau de verre de 3 mm et par le film PVB - qui peut si nécessaire - être choisi parmi les PVB présentant la plus grande capacité de filtration du rayonnement ultra-violet.

La configuration 6 qui comporte une couche basse émissive en contact avec la lame d'air intercalaire correspond à la base de configuration préférée car permettant d'atteindre un facteur solaire à l'état coloré de seulement 11 % et un facteur solaire à l'état décoloré de 24%.

L'exemple 7 est une reprise de la configuration 5 mais cette fois avec un système électrochrome présentant un contraste plus grand, avec ainsi une transmission lumineuse à l'état décoloré pour l'ensemble du vitrage de 51 %.

Le tableau ci-dessus fait également ressortir pour l'état OFF, donc l'état de décoloration maximale, une pureté dans la couleur de seulement 5 % ce qui signifie que la couleur est en fait pratiquement imperceptible à l'oeil et que celui-ci perçoit une couleur neutre. Par contre, pour l'état ON, en coloration maximale, la pureté dans la couleur dominante est de 25 %, cette couleur est donc bien effectivement perçue comme la couleur dominante.

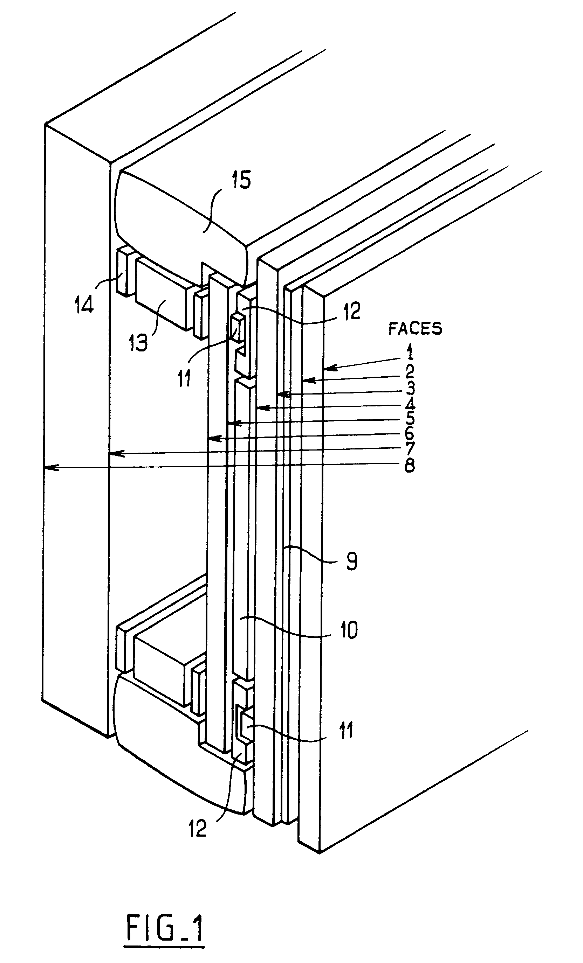

Sur la figure 1, on a ainsi schématisé un double-vitrage correspondant à la configuration préférée comportant 4 panneaux de verre, soit 8 faces numérotées de 1 à 8, disposés de la manière suivante : en premier, un panneau de verre de 3 mm avec la face 1 en façade et la face 2 collée à une feuille de PVB 9 de 0,38 mm ; en second, un panneau de verre également de 3 mm auquel appartiennent la face 3 collée de même à la feuille PVB 9 et la face 4 revêtue d'une couche électroconductrice transparente d'ITO puis d'une couche d'oxyde d'iridium. Sur cette couche d'oxyde d'iridium adhère le polymère conducteur ionique 10 d'une épaisseur de 100 micromètres.

Le système électrochrome doit également comprendre des éléments de connexion à un dispositif d'alimentation en procédant du point de vue électrique comme indiqué dans la demande de brevet EP. Pour cela, il est avantageux de prévoir des couches électroconductrices qui d'un côté sont déposées jusqu'au bord du panneau et de l'autre s'arrêtent à par exemple 1 cm, les panneaux étant montés en opposition de façon à ce que la bande d'amenée de courant 11, déposée par exemple par sérigraphie, sur la bande marginale d'un des panneaux ne soit pas en regard de la couche électroconductrice du panneau opposé, ceci afin d'éviter les courts circuits. Dans ce même but, près des bords, le film d'électrolyte est de préférence remplacé par un joint 12 par exemple à base de caoutchouc butyl, joint qui joue aussi un rôle lors de l'assemblage du système en maintenant les deux panneaux espacés pendant la phase de dégazage et contribue à préserver le système de la pénétration d'eau liquide ou de vapeur d'eau.

Cet ensemble extérieur de 3 panneaux formant une structure composite complexe est associé par un montage type double vitrage a un 4ème panneau de verre de 6 mm qui porte donc les faces 7 et 8. La face 7, ou éventuellement la face 6 est munie d'une couche basse émissive (typiquement à base d'argent mais une couche d'oxyde de type ITO ou SnO₂ dopé au fluor peut également être utilisée bien que les performances d'émissivité soient légèrement inférieures). Cette association du type double-vitrage est réalisée selon les techniques bien connues de cet art par exemple en employant un cadre périphérique d'aluminium 13, collé au verre par des cordons de caoutchouc butyl 14 et doublé par un second joint d'étanchéité 15 à base de polyuréthane ou de polysulfure. La lame d'air a par exemple une épaisseur de 12 mm.

Cette configuration optimisée peut bien sûr comporter de nombreuses variantes. Il doit être ainsi remarqué que les épaisseurs de verre et de lame d'air indiquées peuvent bien entendu être modifiées sans sortir du cadre de l'invention. De même, l'invention n'est nullement limitée au type de système électrochrome décrit plus haut, tout système comportant un polymère électrolyte conducteur ionique (protons, Li⁺, Na⁺, ...) pouvant être utilisé en substitution.

Un autre aspect important de l'invention est que les états ON/OFF ne correspondent en fait qu'à deux état extrêmes et que tous les états intermédiaires peuvent être obtenus en jouant par exemple sur les temps ou les tensions de commutation.

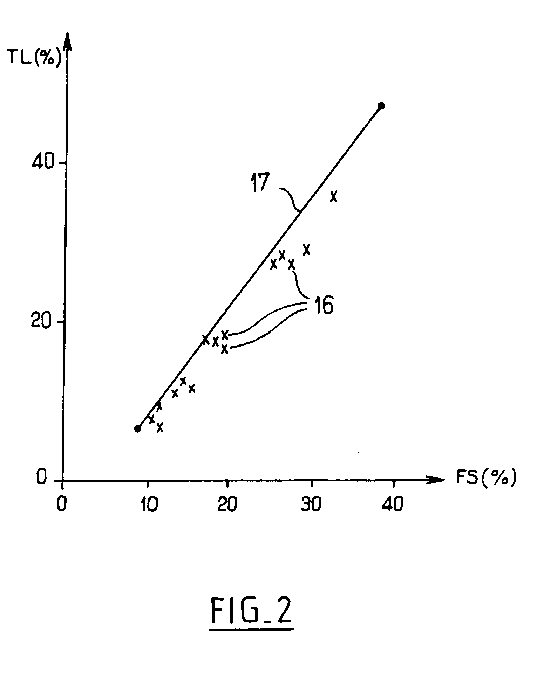

La figure 2 permet d'illustrer l'avantage qui en résulte. Sur cette figure 2, on a en effet reporté les valeurs des transmissions lumineuses (TL exprimées en pourcentages) en fonction des facteurs solaires (FS exprimés en pourcentages) pour une série de double-vitrages (verre 6 mm; lame d'air 12 mm ; verre 6 mm ; la paroi extérieure étant constituée par un vitrage de protection solaire commercialisé sous la marque COOL-LITE de la société des GLACERIES DE SAINT-ROCH, ce vitrage étant typiquement obtenu par pulvérisation cathodique sous vide en réalisant par exemple un empilement de type ZnSnO /acier nitruré/TiO₂ ou TiN l'épaisseur de la couche ZnSnO variant entre 10 et 100 nm selon la teinte désirée, celle de la couche d'acier nitruré entre 15 et 45 nm (les épaisseurs des plus grandes correspondant aux facteurs solaires les plus petits) et la couche d'oxyde de titane étant typiquement de 10 nm. La couche pulvérisée est positionnée vers la lame d'air intercalaire.

Comme le montre la série 16 de points indiquée sur la figure 2, ce type d'empilement permet de balayer une très large gamme de performances mais il faut bien remarquer que chaque point correspond à un empilement donné et que pour modifier le facteur solaire, il n'y a pas d'autre possibilité que de remplacer le vitrage. Par contre, la droite 17 représentative d'un vitrage selon l'invention, et qui couvre pour l'essentiel la même gamme de facteurs solaires, est obtenue avec un seul et même vitrage dont la transmission lumineuse peut varier entre 7 et 50 % de l'état OFF à l'état ON.

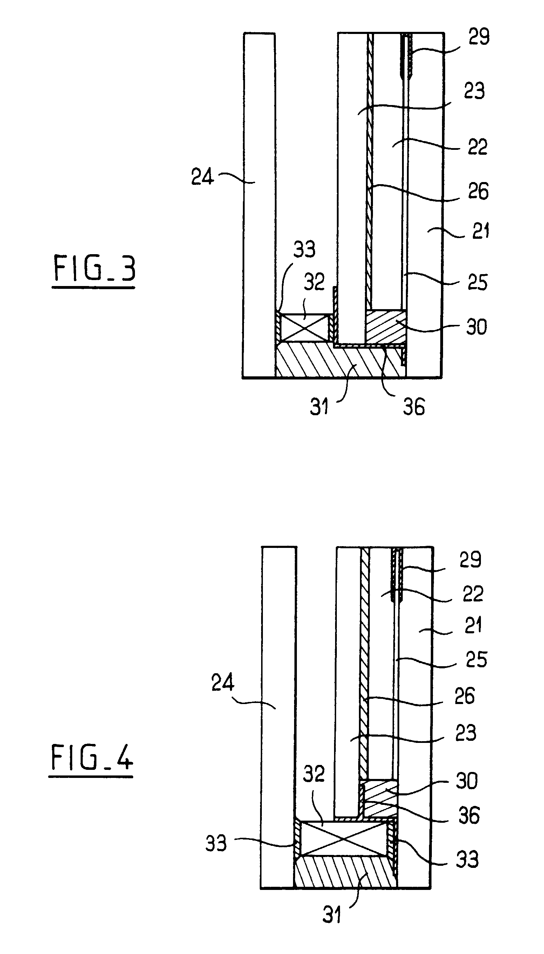

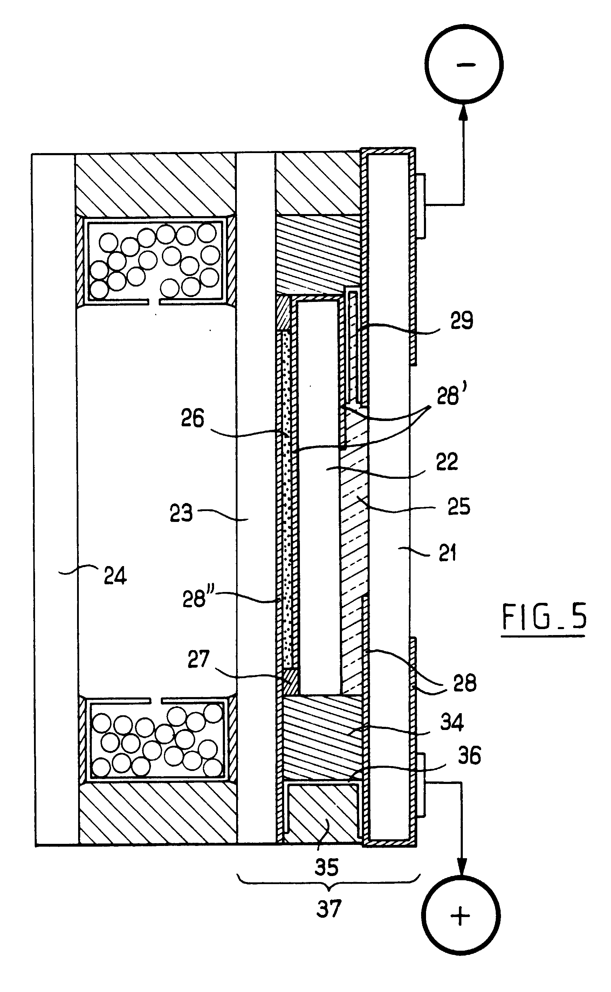

Les figures 3, 4 et 5 mettent en relief un autre aspect important des vitrages bâtiment selon l'invention, à savoir la configuration de montage choisie. La figure 5 propose un schéma de montage relativement complet, tandis que les figures 3 et 4 reprennent deux autres configurations possibles, la configuration de la figure 3 reprenant celle proposée à la figure 1.

Dans tous les cas, le double vitrage comporte quatre feuilles de verre, numérotées 21, 22, 23 et 24 de l'extérieur vers l'intérieur du bâtiment, la feuille de verre 22 étant systématiquement la plus petite. Les feuilles 21 et 22 sont assemblées par un film organique 25 de type PVB ou PU, comportant des additifs anti-U.V. Entre les feuilles 22 et 23, on trouve l'empilement 26 des couches fonctionnelles du système électrochrome. Comme déjà mentionné, cet empilement est protégé latéralement par un joint d'étanchéité 27 (visible figure 5 sur deux côtés, ce joint formant en fait un cadre continu), par exemple constitué de caoutchouc butyl avec un agent desséchant de type tamis moléculaire. D'autre part, les feuilles de verre 21, 22 et 23 comportent des parties sérigraphiées électroconductrices 28, 28' et 28".

Les trois configurations diffèrent essentiellement par la taille et la position de la plaque 23. Dans les deux premières configurations proposées (figures 3 et 4) cette plaque 23 est de dimensions intermédiaires entre celles de la plaque extérieure 21 et celles de la plaque 22 de sorte que les plaques 21 et 23 délimitent une gorge intérieure 30, dans laquelle est injecté un joint d'étanchéité par exemple du type polysulfure, polyuréthane ou silicone et que les plaques 24 et 21 délimitent pour leur part une gorge extérieure 31 ou est injecté un joint d'étanchéité du même type.

Dans le cas de la figure 4, les joints 30 et 31 sont séparés par le cadre entretoise 32 qui délimite l'épaisseur de la lame d'air entre les panneaux 23 et 24 et est collé aux panneaux 24 et 21 par des minces cordons en mastic 33, par exemple à base de caoutchouc butyl. Par contre, dans le cas de la figure 3, le cadre entretoise est placé directement entre les panneaux 23 et 24. La configuration de la figure 4 permet d'interposer 4 épaisseurs (au lieu de 3) de joint d'étanchéité entre le système électrochrome. Par contre, elle rend relativement délicate la mise en place des clinquants comme il sera vu plus loin.

Dans la configuration de la figure 5, le panneau 23 est de mêmes dimensions que le panneau 21, la gorge définie par le panneau intérieur 22 étant remplie par deux joints superposés 34 et 35 (le joint intérieur étant par exemple un caoutchouc butyl avec tamis moléculaire et le joint extérieur par exemple du type polysulfure). Cette configuration aboutit comme dans le cas de la figure 3 à un ensemble de 3 joints d'étanchéité qui isolent le système électrochrome de l'extérieur.

Venons-en maintenant plus en détail aux éléments de connexion.

Dans les trois configurations, sur la plaque extérieure 21, les parties sérigraphiées 28 sont au nombre de deux (un pôle négatif en haut et un pôle positif en bas) s'étendant au voisinage des bords en formant un fer à cheval de façon à autoriser une arrivée des connexions du boitier d'alimentation par la face extérieure (il va de soi que dans les schémas proposés, la partie représentée est essentiellement la partie du vitrage montée dans la feuillure et que la partie centrale n'est pas dessinée selon une échelle réduite).

Sur la plaque 22, la sérigraphie court d'un bord de la face à toute la hauteur de la face 4. La continuité électrique avec le pôle négatif de la partie 28 est assurée à l'aide d'un clinquant métallique en U 29.

Pour sa part, la plaque 23 est munie sur toute sa hauteur d'une partie sérigraphiée 28", reliée au pôle positif 28 par un clinquant 36 dont la forme est en S (figures 3 et 4) ou en U. Dans le cas de la figure 3, la sérigraphie 28" doit comporter un retour sur la face 6 (face intérieure de la plaque 23), bien que cette dispositif entraîne une contrainte supplémentaire lors de la sérigraphie, elle permet d'assurer l'absence de tout court-circuit alors qu'au contraire, la position du clinquant proposée figure 4, entraîne un tel risque.

Avec la figure 5, ce risque est à nouveau très faible car le clinquant est isolé du système électrochrome par toute l'épaisseur du joint 36. Il peut de plus être remarqué que le clinquant 36 est totalement protégé de l'extérieur par le joint 35 de sorte que le vitrage de la figure 5 peut être assimilé à un double vitrage ordinaire formé d'un panneau 24 et d'un panneau 37, sans que des précautions particulières ne soient à prendre au moment du montage (si ce n'est le positionnement en face 1 du panneau 21). Cette configuration est de ce fait privilégiée par rapport aux deux autres dans lesquelles les clinquants 36 ne sont protégés qu'une fois l'assemblage du double vitrage terminé.

Pour éviter tout problème de courts circuits dus au caractère électroconducteur de certains joints et plus particulièrement des joints à base de caoutchouc butyl, les parties sérigraphiées en contact avec ces joints sont de préférence revêtues d'une couche émaillée protectrice, faite d'un émail non conducteur électrique.

Comme il a été vu plus haut, en comparant notamment les exemples 2 et 6, le facteur solaire du vitrage peut être notamment abaissé à l'aide d'une couche d'amélioration du confort thermique, telle qu'une couche basse émissive ou une couche dite anti-solaire.

Le tableau suivant a été établi en comparant diverses configurations de type 7, incorporant de plus une couche d'amélioration du confort thermique placée selon les cas en face 2, 6 ou 7.

Par bas émissif, il est entendu une couche (ou plus exactement un empilement de couches) dont l'émissivité est de 0,11 (par exemple un système du type "Planitherm" et par anti-solaire, une couche dont l'émissivité est de 0,04 (par exemple un système du type bi-couches à l'argent).

| N° | Couche confort thermique | Face | T_{L} ON | T_{L} OFF | FS ON | FS OFF | A ON |
|---|---|---|---|---|---|---|---|
| 8 | Aucune | - | 6 | 47 | 0,15 | 0,44 | 0,88 |
| 9 | Bas émissif | 6 | 6 | 47 | 0,09 | 0,33 | 0,88 |
| 10 | Bas émissif | 7 | 6 | 47 | 0,11 | 0,37 | 0,88 |
| 11 | Anti-solaire | 6 | 6 | 47 | 0,08 | 0,33 | 0,88 |
| 12 | Anti-solaire | 7 | 6 | 47 | 0,11 | 0,33 | 0,88 |
| 13 | Anti-solaire | 2 | 6 | 47 | 0,12 | 0,33 | 0,69 |

Les facteurs solaires les plus faibles sont obtenus avec une couche placée en face 6. Par ailleurs, si la couche est placée en face 2 ou ce qui revient au même en face 3, on diminue de manière importante le coefficient d'absorption énergétique (A_{ON}), ce qui conduit à un moindre échauffement du vitrage qui doit alors supporter des contraintes plus faibles. Il est aussi possible de combiner des couches en face 2 et en face 6 (avec pour la couche en face 2 éventuellement utilisation d'une couche réfléchissante dans le visible), ce qui alors permet des facteurs solaires très faibles mais avec une baisse de la transmission lumineuse à l'état décoloré OFF.

A noter que la couche d'amélioration du confort thermique placée en face 6 peut être remplacée par un empilement électrochrome. On aura alors une configuration de type verre / PVB / verre / système électrochrome / verre / PVB / verre / système électrochrome / verre / air / verre, ou si le système électrochrome présente une résistance aux ultraviolets suffisante, verre / système électrochrome / verre / PVB / verre / système électrochrome / verre / air / verre.

Avec de tels systèmes, on obtient à l'état ON, une transmission lumineuse inférieure à 1%, et un facteur solaire inférieur à 0,05. On a alors un véritable effet de volets, mais au prix toutefois d'une transmission lumineuse de seulement 25% à l'état OFF.

## Revendications

1. Vitrage bâtiment à contrôle solaire électrocommandable, comportant un panneau (37) constitué par une structure composite (21, 22, 23), ladite structure comportant une première feuille de verre (21), un polymère organique d'assemblage (9, 25) filtrant les ultraviolets, une seconde feuille de verre (22), un système à transmission variable électrochrome composé d'un empilement (26) de couches fonctionnelles, avec notamment une couche électroconductrice transparente, une couche d'un matériau électrochrome cathodique, un polymère organique conducteur ionique, une couche d'un matériau électrochrome anodique et une couche électroconductrice transparente, et une troisième feuille de verre (23), **caractérisé en ce qu'**il comporte un second panneau intérieur (24) espacé dudit panneau (37) à structure composite (21, 22, 23) par une lame de gaz intercalaire, avec le panneau (37) à structure composite tourné vers l'extérieur de manière à ce que la première feuille de verre (21) soit la feuille de verre extérieure.

2. Vitrage bâtiment selon la revendication 1, **caractérisé en ce que** l'empilement (26) de couches fonctionnelles de la structure composite est isolé de l'extérieur par une succession d'un minimum de 3 joints d'étanchéité (27, 34, 35).

3. Vitrage selon l'une des revendications précédentes, **caractérisé en ce que** la seconde feuille de verre (22) de la structure composite (21, 22, 23) est plus petite que les deux feuilles de verre (21, 23) qui l'entourent, de façon à délimiter une gorge périphérique servant de logement à au moins un joint périphérique d'étanchéité (34, 35).

4. Vitrage selon l'une des revendications 1 ou 2, **caractérisé en ce que** la troisième feuille (23) de la structure composite (21, 22, 23) est de dimensions intermédiaires entre celles de la première (21) et de la seconde (22), de sorte que la première et la troisième feuilles délimitent une gorge (30).

5. Vitrage selon l'une des revendications 1 à 3, **caractérisé en ce que** la troisième feuille (23) de la structure composite (21, 22, 23) est de mêmes dimensions que la première (21).

6. Vitrage selon les revendications 3 et 5, **caractérisé en ce que** la gorge périphérique (30) est remplie par deux joints superposés notamment un premier joint (34) en caoutchouc butyl recouvert d'un second (35) en polysulfure.

7. Vitrage bâtiment selon l'une des revendications 1 à 6, **caractérisé en ce que** le panneau extérieur (37) est d'une taille identique à celle du panneau intérieur (24).

8. Vitrage selon l'une des revendications précédentes, **caractérisé en ce que** le polymère organique (9, 25) d'assemblage filtrant les ultraviolets est coloré.

9. Vitrage selon l'une des revendications précédentes, **caractérisé en ce qu'**il comporte des amenées de courant sérigraphiées électroconductrices (28, 28', 28 ").

10. Vitrage selon la revendication 9, **caractérisé en ce que** les amenées de courant sérigraphiées en contact avec les joints d'étanchéité sont protégées par une couche d'émail non électroconductrice.

11. Vitrage selon l'une des revendications 9 ou 10, **caractérisé en ce que** la connexion électrique des amenées de courant (28, 28', 28 ") est assurée à l'aide d'un clinquant métallique (36, 29) en forme de S ou de U.

12. Vitrage selon la revendication 11, **caractérisé en ce que** le clinquant (36) est isolé à la fois du système électrochrome (26) et de l'extérieur par des joints (34, 35).

13. Vitrage selon l'une des revendications précédentes, **caractérisé en ce qu'**il comporte une couche d'un matériau électrochrome cathodique à base d'oxyde de tungstène.

14. Vitrage selon l'une des revendications précédentes, **caractérisé par** une couche à basse émissivité sur la face tournée vers la lame de gaz intercalaire d'au moins un des panneaux (37, 24).

15. Vitrage selon la revendication 14, **caractérisé en ce que** ladite couche à basse émissivité est sur la face (6) tournée vers la lame de gaz intercalaire du panneau de verre extérieur (37).

16. Vitrage selon l'une des revendications précédentes, **caractérisé en ce qu'**il comporte une couche à basse émissivité ou réfléchissante dans le visible sur une des faces (2, 3) en contact avec le polymère (9, 25) organique d'assemblage.

17. Vitrage selon l'une des revendications précédentes, **caractérisé en ce qu'**il comporte deux empilements (26) de type électrochrome.

## Patentansprüche

1. Gebäudeverglasung mit elektrisch steuerbarer Sonneneinstrahlung, umfassend eine Platte (37), die aus einer Verbundstruktur (21, 22, 23) besteht, die eine erste Glasscheibe (21), ein als Verbindung dienendes, für ultraviolette Strahlung undurchlässiges organisches Polymer (9, 25), eine zweite Glasscheibe (22), ein System mit elektrochromer veränderlicher Transmission, das aus einem Aufbau (26) aus funktionellen Schichten mit insbesondere einer elektrisch leitfähigen transparenten Schicht, einer Schicht aus einem kathodischen elektrochromen Material, einem ionenleitfähigen organischen Polymer, einer Schicht aus einem anodischen elektrochromen Material und einer elektrisch leitfähigen transparenten Schicht besteht, und eine dritte Glasscheibe (23) enthält, **dadurch gekennzeichnet, daß** sie eine zweite Innenplatte (24) umfaßt, die von der Platte (37) mit Verbundstruktur (21, 22, 23) durch einen Gaszwischenraum beabstandet ist, wobei die Platte (37) mit Verbundstruktur derart nach außen zeigt, daß die erste Glasscheibe (21) die Außenglasscheibe ist.

2. Gebäudeverglasung nach Anspruch 1, **dadurch gekennzeichnet, daß** der Aufbau (26) aus funktionellen Schichten der Verbundstruktur durch eine Abfolge von mindestens drei Dichtungen (27, 34, 35) nach außen isoliert ist.

3. Verglasung nach Anspruch 1 oder 2, **dadurch gekennzeichnet, daß** die zweite Glasscheibe (22) der Verbundstruktur (21, 22, 23) derart kleiner als die sie umgebenden beiden Glasscheiben (21, 23) ist, daß eine Umfangsrille begrenzt wird, die als Aufnahme für mindestens eine Randdichtung (34, 35) dient.

4. Verglasung nach Anspruch 1 oder 2, **dadurch gekennzeichnet, daß** die Abmessungen der dritten Glasscheibe (23) der Verbundstruktur (21, 22, 23) zwischen denen der ersten (21) und der zweiten (22) derart liegen, daß die erste und die dritte Glasscheibe eine Umfangsrille (30) begrenzen.

5. Verglasung nach einem der Ansprüche 1 bis 3, **dadurch gekennzeichnet, daß** die Abmessungen der dritten Glasscheibe (23) der Verbundstruktur (21, 22, 23) gleich denen der ersten (21) sind.

6. Verglasung nach den Ansprüchen 3 und 5, **dadurch gekennzeichnet, daß** die Umfangsrille (30) von zwei übereinanderliegenden Dichtungen, insbesondere einer ersten Dichtung (34) aus Butylkautschuk, die mit einer zweiten Dichtung (35) aus Polysulfid bedeckt ist, ausgefüllt wird.

7. Gebäudeverglasung nach einem der Ansprüche 1 bis 6, **dadurch gekennzeichnet, daß** die Außenplatte (37) genauso groß wie die Innenplatte (24) ist.

8. Verglasung nach einem der vorhergehenden Ansprüche, **dadurch gekennzeichnet, daß** das als Verbindung dienende, für ultraviolette Strahlung undurchlässige organische Polymer (9, 25) gefärbt ist.

9. Verglasung nach einem der vorhergehenden Ansprüche, **dadurch gekennzeichnet, daß** sie mittels Siebdruck aufgebrachte elektrisch leitfähige Stromzuführungen (28, 28', 28") enthält.

10. Verglasung nach Anspruch 9, **dadurch gekennzeichnet, daß** die mit den Dichtungen in Kontakt befindlichen, mittels Siebdruck aufgebrachten Stromzuführungen durch eine elektrisch nicht leitfähige Emailschicht geschützt werden.

11. Verglasung nach Anspruch 9 oder 10, **dadurch gekennzeichnet, daß** der elektrische Anschluß der Stromzuführungen (28, 28', 28") von einer S- oder U-förmigen Metallfolie (36, 29) sichergestellt wird.

12. Verglasung nach Anspruch 11, **dadurch gekennzeichnet, daß** die Metallfolie (36) gleichzeitig gegen das elektrochrome System (26) und nach außen durch Dichtungen (34, 35) isoliert ist.

13. Verglasung nach einem der vorhergehenden Ansprüche, **dadurch gekennzeichnet, daß** sie eine Schicht aus einem kathodischen elektrochromen Material auf der Basis von Wolframoxid enthält.

14. Verglasung nach einem der vorhergehenden Ansprüche, **dadurch gekennzeichnet, daß** sich auf der zum Gaszwischenraum gerichteten Seite mindestens einer der Platten (37, 24) eine niedrig emittierende Schicht befindet.

15. Verglasung nach Anspruch 14, **dadurch gekennzeichnet, daß** sich die niedrig emittierende Schicht auf der zum Gaszwischenraum gerichteten Seite (6) der Außenglasplatte (37) befindet.

16. Verglasung nach einem der vorhergehenden Ansprüche, **dadurch gekennzeichnet, daß** sie auf einer der Seiten (2, 3), die sich mit dem als Verbindung dienenden organischen Polymer (9, 25) im Kontakt befinden, eine niedrig emittierende oder im sichtbaren Bereich reflektierende Schicht enthält

17. Verglasung nach einem der vorhergehenden Ansprüche, **dadurch gekennzeichnet, daß** sie zwei elektrochrome Aufbauten (26) enthält.

## Claims

1. Glazing pane for buildings with electrically controllable solar radiation control, comprising a panel (37) constituted of a composite structure (21, 22, 23), said structure comprising a first glass sheet (21), a connecting organic polymer (9, 25) which filters ultraviolet rays, a second glass sheet (22), a system with variable electrochromic transmission composed of a stack (26) of functional films including, notably, a transparent electrically conducting film, a film of a cathodic electrochromic material, an ion conducting organic polymer, a film of an anodic electrochromic material and a transparent electrically conducting film, and a third glass sheet (23), characterized in that it comprises a second internal panel (24) spaced away from said panel (37) of composite structure (21, 22, 23) by an intermediate gas gap, with the panel (37) having a composite structure facing towards the outside in such a way that the first glass sheet (21) shall be the outer glass sheet.

2. Glazing pane for buildings according to claim 1, characterized in that the stack (26) of functional films of the composite structure is isolated from the outside by a succession of at least 3 seals (27, 34, 35).

3. Glazing pane according to one of the preceding claims, characterized in that the second glass sheet (22) of the composite structure (21, 22, 23) is smaller than the two glass sheets (21, 23) flanking it, in such a way as to define a peripheral groove serving as seating for at least one peripheral seal (34, 35).

4. Glazing pane according to one of claims 1 or 2, characterized in that the third sheet (23) of the composite structure (21, 22, 23) is of dimensions intermediate between those of the first sheet (21) and of the second sheet (22), in such a way that the first and third sheets define a groove (30).

5. Glazing pane according to one of claims 1 to 3, characterized in that the third sheet (23) of the composite structure (21, 22, 23) is of the same dimensions as the first (21).

6. Glazing pane according to claims 3 and 5, characterized in that the peripheral groove (30) is filled with two superposed seals, notably a first seal (34) of butyl rubber covered with a second seal (35) of polysulphide.

7. Glazing pane for buildings according to one of claims 1 to 6, characterized in that the outer panel (37) is of a size identical to that of the inner panel (24).

8. Glazing pane according to one of the preceding claims, characterized in that the connecting organic polymer (9, 25) that filters ultraviolet rays is coloured.

9. Glazing pane according to one of the preceding claims, characterized in that it comprises screen-printed electrically conducting supply leads (28, 28', 28").

10. Glazing pane according to claim 9, characterized in that the screen-printed supply leads in contact with the seals are protected by a film of electrically non-conducting enamel.

11. Glazing pane according to one of claims 9 or 10, characterized in that the electrical connection for the supply leads (28, 28', 28") is provided by a metal foil (36, 29) of S-shape or U-shape.

12. Glazing pane according to claim 11, characterized in that the foil (36) is isolated both from the electrochromic system (26) and from the outside by seals (34, 35).

13. Glazing pane according to one of the preceding claims, characterized in that it comprises a film of a cathodic electrochromic material based upon tungsten oxide.

14. Glazing pane according to one of the preceding claims, characterized by a low-emissivity film on the face towards the gas gap of at least one of the panels (37, 24).

15. Glazing pane according to claim 14, characterized in that said low-emissivity film is on the face (6) towards the gas gap of the outer glass panel (37).

16. Glazing pane according to one of the preceding claims, characterized in that it comprises a low-emissivity film or film that reflects in the visible range on one of the faces (2, 3) in contact with the connecting organic polymer (9, 25).

17. Glazing pane according to one of the preceding claims, characterized in that it comprises two stacks (26) of electrochromic type.
